# FASCICULE DE BREVET EUROPEEN

(11) **EP 3 383 805 B1**
(45) Date de publication et mention de la délivrance du brevet: **25.11.2020**
(21) Numéro de dépôt: 16801828.1
(22) Date de dépôt: 20.10.2016
(51) Int. Cl.: C02F 3/10, B01D 29/11, B01D 29/58

(54) **ÉLÉMENT DE STATION D'ÉPURATION DE FLUX AQUEUX POLLUE ET PROCÉDÉ CORRESPONDANT**
KLÄRANLAGENELEMENT FÜR EINEN VERSCHMUTZTEN WÄSSRIGEN STROM UND ENTSPRECHENDES VERFAHREN
PURIFICATION PLANT ELEMENT FOR A POLLUTED AQUEOUS FLOW AND CORRESPONDING METHOD

(30) Priorité: 20.10.2015 FR 1502205
(43) Date de publication de la demande: 10.10.2018
(73) Titulaire: AB7 Industries S.A., 31450 Deyme (FR)
(72) Inventeur: CHELLE, René, 31450 Deyme (FR); VERONESE, Thierry, 31370 Lautignac (FR)
(86) Numéro de dépôt international: PCT/FR2016/000171
(87) Numéro de publication internationale: WO 2017/068251

(56) Documents cités:
- EP-A1- 0 842 902
- US-A1- 2012 067 797
- US-B1- 6 843 909

## Description

La présente invention se rapporte au domaine des équipements de traitement des effluents aqueux pollués ; elle concerne, en particulier, un dispositif destiné au traitement par dégradation biologique des matières organiques présentes dans les circuits d'évacuation et/ou de traitement des effluents domestiques tels que les eaux usées et les eaux vannes des immeubles ou des ateliers agroalimentaires.

Les stations d'épuration actuellement utilisées comportent de grands bassins dans lesquels se trouvent des boues activées aérobies comportant une large fraction des matières polluantes et des microorganismes en suspension contenus dans les effluents aqueux polluées que l'on y déverses ; ces bassins sont aérés pour provoquer une dégradation des polluants sous l'action des microorganismes, notamment des bactéries, en milieu oxygéné (voir le brevet FR2282550, page 22, lignes 5-22 et les brevets US3915853 et US5531898). Mais l'épuration n'est généralement pas suffisante pour que l'eau traitée soit considérée comme dépolluée, de sorte qu'il est nécessaire, à la suite du traitement par les boues activées aérobies, de mettre en œuvre un système de type décanteur qui, par sa partie basse, assure le recyclage partiel des boues dans le bassin aéré ainsi que le soutirage des boues non recyclées et, par sa partie haute, fournit un débit d'eau dépolluée rejetée en milieu naturel, ce débit permettant de maintenir un niveau liquide sensiblement constant à l'intérieur du bassin aéré.

La clarification ainsi obtenue n'est satisfaisante que pour des concentrations de matières volatiles en suspension (MVS) (à savoir microorganismes et notamment bactéries) inférieures à environ 4g/l dans le bassin. En effet, pour que la floculation se passe bien dans le décanteur, il faut que les microorganismes ne soient pas sous-alimentés par le liquide qui les environne sans quoi ils utilisent les matières nutritives présentes pour assurer en priorité leur propre alimentation et leur production de biopolymères devient insuffisante pour assurer l'agglomération des matières constitutives des flocs. Mais, il faut également que les matières nutritives ne soient pas excédentaires pour que les microorganismes ne se développent pas trop rapidement, ce qui ne donnerait pas aux biopolymères produit un temps suffisant pour assurer par collage une bonne agglomération du floc. Il est donc obligatoire de maintenir un niveau d'alimentation en polluant et un temps de séjour des boues dans le bassin, ce qui limite la productivité de l'installation. En d'autres termes, l'utilisation, en complément d'un bassin à boues activées aérobies, d'un matériel de décantation, limite la productivité de l'élément de station d'épuration concerné, car la pollution dans le décanteur doit rester dans une gamme donnée si l'on veut que la dépollution due au décanteur soit efficace.

L'homme du métier, pour chiffrer le fonctionnement ci-dessus décrit, a défini une valeur MVS, qui repère l'importance de la pollution d'une eau (matière volatile en suspension). Pour évaluer MVS, l'eau polluée d'un échantillon est évaporée à 100°C sous pression réduite et le résidu (poids R) est calciné à 550°C, ce qui donne le poids (q) des matières minérales : la valeur R-q donne le poids des microorganismes dans l'échantillon. De plus, l'activation des boues du bassin est repérée par une valeur DB05, qui correspond au poids d'oxygène absorbé en 5 jours par un échantillon d'eau pollué où l'on fait buller de l'oxygène. On définit alors un coefficient de charge massique Cₘ et il a été constaté que la floculation dans un décanteur se déroule correctement si l'on a 0,2<Cₘ<0,6.

Il en résulte que si l'on désire une clarification satisfaisante, on ne peut pas raccourcir le temps séjour dans le bassin, ce qui impose un grand bassin pour un débit donné ou un faible débit pour un bassin donné. L'utilisation d'un décanteur constitue donc une limite à la productivité.

Pour éviter l'inconvénient que présente l'usage d'un décanteur, on a déjà proposé de mettre en œ uvre en aval des bassins à boues activées, des filtres à membrane, externes ou immergés, dont la sortie permet d'obtenir une eau dépolluée clarifiée. Dans un tel cas, la décantation n'est plus nécessaire après la dépollution due aux boues activées aérobies du bassin, ce qui permet d'augmenter la concentration en MVS (c'est-à-dire en microorganismes) jusqu'à environ 10g/l, d'où il résulte une augmentation de la productivité du bassin. Le volume du bassin aéré peut donc, en présence d'un filtre à membrane, être deux à trois fois plus faible qu'en présence d'un décanteur de type classique. Malheureusement, les systèmes de clarification à membrane entrainent des coûts d'investissement importants et, en outre, la filtration a un coût énergétique pour assurer la circulation dans le filtre, coût qui peut être évalué à une valeur comprise entre 0,5 et 3 kWh par m³.

L'invention est applicable à tout élément de station d'épuration d'un flux aqueux pollué comportant un bassin aéré associé ; elle concerne un système de traitement complémentaire qui clarifie l'eau sans utiliser de décanteur, sans investissement et maintenance lourds et sans dépense énergétique de fonctionnement. Le fait d'éviter l'utilisation d'un décanteur permet d'augmenter la productivité de l'ensemble et donc d'augmenter le débit traité avec les bassins existants ou de réduire la taille des bassins pour le même débit traité.

On a aussi proposé, dans l'état de la technique, par exemple dans EP0842902 A1, un procédé d'épuration basé sur l'utilisation d'une biomasse fixée sur un support. Dans un tel procédé, la biomasse s'accroit et s'adsorbe par ses biopolymères sur le support tout en consommant la pollution du flux aqueux pollué. On peut ainsi limiter les opérations de clarification mais l'alimentation des microorganismes est réduite par une résistance à la diffusion des polluants à travers la biomasse fixée sur son support, tant pour les composés pollués dissouts que pour l'oxygène nécessaire à la dépollution, essentiellement en raison du fait que le support constitue un obstacle solide qui gêne l'accessibilité des réactifs nécessaires à la dépollution.

Selon l'invention, on a proposé un dispositif dans lequel une biomasse est fixée sur une couche fibreuse ou filamenteuse et réalise, grâce aux biopolymères qu'elle génère, un biofilm de maillage très serré, qui empêche les particules en suspension de passer et travaille comme un véritable biofiltre ; néanmoins, l'accès des polluants à la biomasse s'effectue dans des conditions optimales d'aération, de sorte que l'on peut faire monter le taux de MVS à des valeurs supérieures à 4g/l en maintenant une bonne dépollution, la décantation n'étant plus nécessaire. Il convient, bien entendu, pour obtenir la clarification du flux d'eau traité, de faire fonctionner le dispositif pendant un temps de mise en route suffisant pour constituer le biofilm dans la couche fibreuse ou filamenteuse avant que la fonction de clarification soit obtenue à un niveau efficace.

La présente invention a, en conséquence, pour objet une unité de dépollution selon la revendication 1 apte à coopérer avec et à être au moins partiellement immergée dans le bassin d'une station d'épuration ouvert à sa partie supérieure de telle sort qu'un flux aqueux pollué renfermant des matières organiques dissoutes ainsi que des matières solides et des microorganismes en suspension puisse alimenter le côté amont du bassin aéré et fournir, en sortie de ladite unité, un flux d'eau dépollué clarifié, l'unité comportant :
- un déversoir, qui évacue l'eau dépolluée vers l'extérieur du bassin;
- au moins un séparateur de zones traversé par le flux aqueux pollué du bassin. l'une des faces dite « face amont » étant conçue pour recevoir directement le flux aqueux pollué du bassin alors que l'autre face dite « face aval » est conçue pour alimenter le déversoir, le séparateur de zones délimitant donc deux zones, une en amont et une en aval du séparateur, les liquides des deux zones délimitées par le séparateur étant soumis à la même pression externe Po lorsque celui-ci est en opération dans le bassin aéré :

le séparateur comportant sur sa face amont une grille recouverte, du côté amont du bassin, par une couche fibreuse ou filamenteuse, qui est conçue pour arrêter la majeure des parties des matières solides en suspension du flux d'alimentation du bassin ;

la face aval du séparateur étant recouverte d'un écran perméable au liquide du bassin au moins partiellement dépollué par son passage à travers la face amont du séparateur et conçu pour arrêter les matières solides ayant traversé la couche fibreuse et la grille, un espace étant ménagé entre la grille et l'écran et débouchant en partie basse de l'écran sur un dispositif d'évacuation des matières solides situé en partie basse de l'écran.

Selon un mode de réalisation de l'unité de dépollution, qui a été ci-dessus définie, la pression P₀ est la pression atmosphérique et le débit liquide déversé hors d'une unité est défini par le positionnement du déversoir par rapport au niveau du liquide pollué du côté amont du bassin, la couche fibreuse ou filamenteuse étant en totalité au-dessous du niveau du déversoir. Ladite couche doit avoir des propriétés physico-chimiques permettant aux microorganismes responsables de la formation du biofilm de s'y fixer puis de s'y multiplier ; on peut citer des couches en fibres naturelles d'origine végétale ou encore en fibres synthétiques en matière plastique.

Selon un mode de réalisation de l'invention, le poids d'une unité de dépollution est supporté par le bassin aéré.

Selon un mode de réalisation de l'invention, la face aval du séparateur de zones de l'unité de dépollution est recouverte d'un écran perméable au liquide du bassin au moins partiellement dépollué par son passage à travers la face amont du séparateur, ledit écran étant associé, à sa base, à un dispositif d'évacuation des matières solides. Dans un tel cas, on peut prévoir que la partie basse de l'écran comporte le dispositif d'évacuation des matières solides.

Selon un mode de réalisation, une unité de la station peut être désolidarisée de ses moyens de liaison sur le bassin pour permettre son remplacement, lorsque sa fonction de dépollution devient insuffisante.

Selon un mode de réalisation, l'unité permet de faire des contrôles visuels ou analytiques afin d'évaluer l'efficacité de dépollution et de clarification obtenue avec cette unité.

Dans une première variante de réalisation, dans laquelle la face aval du séparateur de zones est recouverte d'un écran perméable au liquide du bassin, la grille du séparateur d'une unité de dépollution a une forme cylindrique, la base de l'écran a une forme conique. Dans ce cas, on peut prévoir que la partie conique de l'écran est raccordée à la bordure basse de la grille. Dans un tel cas, le bassin peut avoir une forme cylindrique d'axe vertical et comporter une pluralité d'unités de dépollution d'axes parallèles à l'axe vertical dudit bassin régulièrement réparties dans le bassin. Dans une deuxième variante de réalisation, le bassin a, vu en plan, une forme allongée dans le sens de l'écoulement du flux pollué entrant, le flux sortant par le déversoir étant extrait de la zone du bassin la plus éloignée de celle qui reçoit le flux entrant, la grille du séparateur d'une unité de dépollution étant disposée transversalement par rapport au déplacement du flux aqueux pollué dans le côté amont du bassin. Dans un tel cas, le bassin aéré peut être, vu en plan, sensiblement rectangulaire et la grille du séparateur d'une unité de dépollution peut être plane et sensiblement perpendiculaire au courant du flux pollué dans côté amont du bassin. Dans un tel cas, l'élément de station selon l'invention, peut comporter un écran qui est associé, le long de son arrête inférieure, à une goulotte, qui constitue le dispositif d'évacuation des matières solides récupérées par l'écran. La goulotte peut être solidaire de la base de la grille. La goulotte peut reposer sur le fond du bassin, qui supporte ainsi le poids de l'unité de dépollution.

La présente invention inclut également un procédé selon la revendication 10 d'épuration d'un flux aqueux pollué renfermant des matières organiques dissoutes ainsi que des matières solides et des microorganismes en suspension, le flux pollué alimentant le côté amont d'un bassin aéré ouvert à sa partie supérieure, ledit bassin coopérant avec au moins une unité de dépollution telle que décrite précédemment pour fournir, en sortie, un flux d'eau dépollué clarifié. L'unité de dépollution est au moins partiellement immergée dans le bassin, ladite unité comportant au moins un séparateur de zones traversé par le flux aqueux pollué du bassin, séparateur dont l'une des faces dite « amont » reçoit directement le flux aqueux pollué du bassin alors que l'autre face dite « face aval » alimente un déversoir, qui évacue l'eau dépolluée vers l'extérieur du bassin, les liquides des deux zones délimitées par le séparateur étant soumis à la même pression externe, ledit séparateur de zones comportant, sur sa face amont, une grille recouverte, du côté amont du bassin, par une couche fibreuse ou filamenteuse, qui arrête la majeure partie des matières solides en suspension du flux d'alimentation du bassin, un biofilm étant généré et progressivement développé sur ladite couche fibreuse ou filamenteuse à partir des microorganismes multipliés grâce aux matières organiques contenues dans le flux aqueux encore pollué, qui la traverse sous l'effet de la différence de pression entre les faces amont et aval du séparateur, ledit biofilm assurant à lui seul la fonction, qui permet d'obtenir la clarification et, si nécessaire, la dépollution concomitante et complémentaire du flux aqueux traité.

La partie basse de l'écran comporte un dispositif d'évacuation des matières solides.

Pour mieux faire comprendre l'objet de l'invention, on va en décrire maintenant, à titre d'exemples purement illustratifs et non limitatifs deux modes de réalisation représentés schématiquement sur le dessin annexé. Sur ce dessin :
- la figure 1 représente, en coupe axiale, un bassin à boue activée de forme cylindrique, ledit bassin comportant, de façon visible, une unité de dépollution partiellement immergée, ladite unité ayant la forme d'un cylindre dont l'axe est parallèle à celui du bassin ;
- la figure 2 représente, en perspective, le bassin d'une variante d'un élément de station d'épuration selon l'invention, ledit bassin ayant une forme parallélépipédique et ne montrant, sur cette figure 2, aucune unité de dépollution complémentaire du bassin à boue activée ;
- la figure 3 présente, en élévation, le bassin de la figure 2 équipé d'une unité de dépollution complémentaire au bassin pour obtenir la clarification du flux aqueux pollué introduit dans le bassin à boue activée.

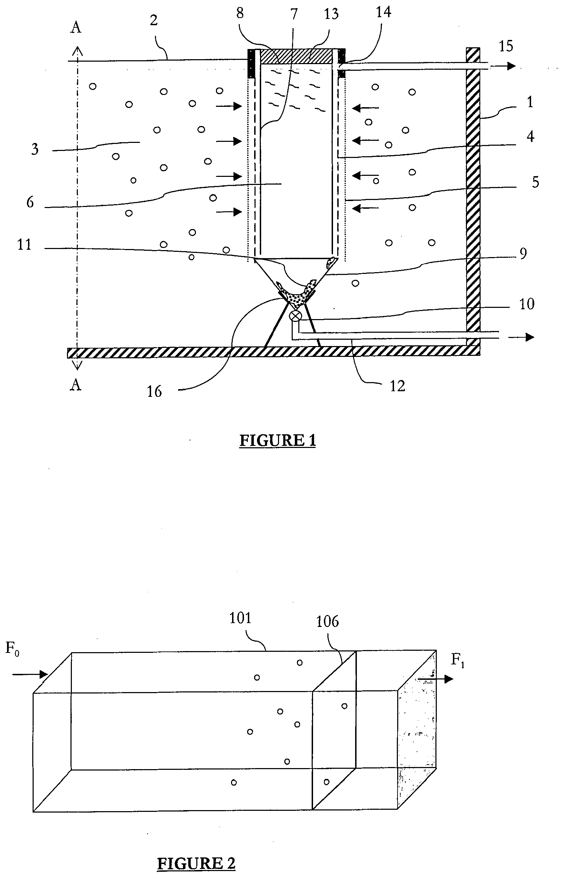

En se référant à la figure 1, on voit que l'on a désigné par 1, dans son ensemble, un bassin cylindrique, dont l'axe A-A est vertical. Le bassin 1 est représenté sur le dessin selon une demi-coupe verticale. Sur la partie non vue, à gauche sur la figure 1, le bassin 1 est alimenté par un flux aqueux pollué issu, par exemple, des eaux usées et des eaux vannes d'un ensemble d'immeubles. Le bassin 1 comporte un bullage d'air pulsé dont le détail n'est pas représenté. On a désigné par 2 la surface libre du liquide 3 qui remplit le bassin 1.

A l'intérieur du bassin 1, on a mis en place des unités de dépollution 6, dont une seule est représentée sur la figure 1. Chaque unité 6 est constituée d'une grille cylindrique 4, qui est recouverte d'une couche 5 de fibres ou de filaments, disposée à l'extérieur de la grille 4 et portée par celle-ci. La couche 5 et donc en contact direct avec l'eau polluée, qui se trouve autour de cette unité de dépollution à la manière d'une chaussette. Du côté de la grille 4, où ne se trouve pas la couche fibreuse 5, c'est-à-dire dans la zone intérieure de l'unité de dépollution 6, on a mis en place un écran 7 qui est perméable au flux aqueux pollué contenu dans le bassin 1. On a désigné par 8 le niveau du liquide contenu à l'intérieur de l'unité de dépollution 6.

La partie inférieure de la grille 4 est mécaniquement reliée à un cône 9 dont le sommet, disposé au voisinage du fond du bassin 1, comporte un dispositif d'évacuation 10. Le cône 9 récupère, par sédimentation et gravité, des solides 11, qui ont été arrêtés par l'écran 7 après qu'ils aient traversé la couche fibreuse 5 et la grille 4. Le dispositif d'évacuation 10 éjecte ces solides 11 par une canalisation 12 disposée sur le fond du bassin 1.

La grille 4 comporte sur sa bordure haute un collet cylindrique 13 non perméable à l'eau, qui permet une liaison étanche entre l'écran 7 et la grille 4 ; un espace périphérique se trouve ménagé entre la grille 4 et l'écran 7, cet espace débouchant en partie basse à l'intérieur du cône 9 pour permettre la récupération et l'évacuation des solides 11. Le débit du flux aqueux, qui est introduit dans le bassin 1 est, après clarification, évacué par un déversoir 14, qui fournit en 15 l'eau dépolluée et clarifiée. Le niveau du déversoir 14 est compris entre le niveau 2 dans le bassin 1, d'une part, et la bordure inférieure du collet 13 le long de laquelle se raccorde la couche fibreuse 5 ; la différence de niveau correspond sensiblement à la perte de charge relative au passage de l'intérieur du bassin 1 vers l'intérieur de l'unité de dépollution 6.

L'unité de dépollution est supportée par le bassin 1 au moyen de tout dispositif approprié 16, qui s'appuie sur le fond du bassin.

Lorsque cet ensemble est mis en œuvre, le flux pollué est introduit dans le bassin 1, remplit l'unité de dépollution 6 et le liquide qui est à l'intérieur de cette unité de dépollution n'est pas moins pollué que celui qui est dans le bassin, étant entendu que, s'il s'agit d'un bassin à boues activées, le liquide qui se trouve dans le bassin est déjà moins pollué que celui qui a été introduit dans ce bassin. Lorsque cet ensemble a fonctionné pendant un temps suffisant, par exemple deux semaines, il s'est formé, dans la couche fibreuse 5, un biofilm qui joue le rôle de filtre mais qui dépollue le liquide qui traverse ladite couche, car les conditions de l'action des microorganismes dans la couche 5 sont très favorables. Le liquide dépollué et clarifié qui se trouve ainsi, après la phase de démarrage, à l'intérieur de l'unité de dépollution 6 peut être évacué par la sortie 15 pour maintenir constant le niveau dans le bassin 1. Bien entendu, un même bassin peut contenir plusieurs unités de dépollution pour constituer un élément de station d'épuration d'eau.

Pour illustrer les conditions de fonctionnement de l'ensemble qui vient d'être décrit, on va donner ci-après les dimensionnements et débits de la mise en œuvre. Le bassin 1 a un diamètre de 35 m et une hauteur de 5 m pour un volume de 4808 m³ ; il est équipé de 30 unités de dépollution 6 qui sont des cylindres et chaque cylindre a une hauteur de 3 m et un diamètre de 0,5 m soit une surface de filtration de 4,66 m² par unité de dépollution 6 soit une surface totale de dépollution de 140 m² pour l'ensemble du bassin 1. Chacune des unités de dépollution 6 comporte, premièrement, une grille 4 ayant une maille d'ouverture de 5 mm, réalisée en matière plastique de même que le cône 9 qui lui est attaché ; deuxièmement, un écran 7 qui est constitué d'une paroi pleine en matière plastique et ayant un poids de 500 g/m² et, troisièmement, une couche 5 constituée par des fibres de 10 mm de diamètre en une matière plastique de la marque « Nylon® », fournies par la société HYOSUNG ; ladite couche a un poids de 100 g/m².

Le flux aqueux pollué, qui alimente le bassin 1, a un débit de 100 m³/h. La pollution du flux dans le bassin 1 est évaluée selon les paramètres suivants : MVS=4 g/l ; DB05 = 0,5 g/l ; Cₘ= 0,12. Le flux aqueux pollué qui alimente le bassin 1 a un débit de 100 m³/h. La pollution dans le bassin 1 est évaluée selon les paramètres suivants :
- MVS = 3 g/l
- DB05= 0,5 g/l
- Cₘ= 0,1

Après une phase de démarrage de 2 semaines, l'eau fournie par la sortie 15, avec le même débit que l'entrée du bassin, est dépolluée et clarifiée ; elle correspond aux paramètres de qualité suivants :
- DB05<25 mg/l
- MVS < 10 mg/l

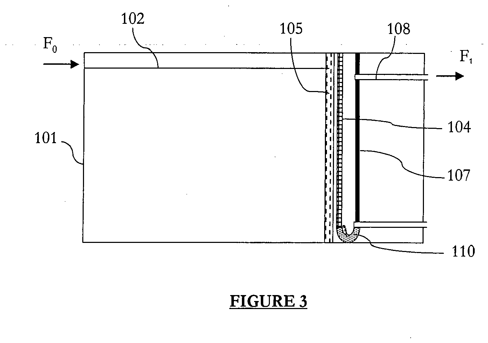

En se référant maintenant aux figures 2 et 3 du dessin, on va décrire une variante de réalisation dans laquelle le bassin de dépollution, qui coopère avec une unité de dépollution partiellement immergée pour constituer un élément de station d'épuration d'eau selon l'invention, a la forme d'un parallélépipède rectangle 101. Le bassin 101 est associé à une unité de dépollution 106 de forme plane qui est disposée parallèlement à l'une des petites faces du bassin 101. Cette petite face est perpendiculaire au flux pollué qui alimente le bassin 101 selon la flèche F0. Le flux sortant de l'élément de station de dépollution s'effectue selon la flèche F1 qui est parallèle à F0. Le plan de l'unité de dépollution 106 se trouve au voisinage de la sortie du flux aqueux qui s'effectue selon la flèche F1. Le volume du bassin 101, qui se trouve entre F0 et l'unité de dépollution 106, contient une eau polluée non clarifiée ; le volume, qui se trouve du côté de l'unité 106 d'où part la flèche F1, contient le flux aqueux clarifié.

Comme il est visible sur les figures 2 et 3, on a simplifié la représentation de l'unité de dépollution, compte tenu du fait que la structure générale de ladite unité a été décrite en détail pour la première variante de réalisation représentée sur la figure 1. L'unité de dépollution 106 est, comme l'unité de dépollution 6, constituée de trois éléments essentiels : d'une part une structure de support mécanique qui, dans la première variante, était la grille 4, et qui, dans la deuxième variante, a été référencée 104 ; d'autre part, une couche fibreuse ou filamenteuse qui, dans la première variante, était un coussin de fibres de Nylon®, cette couche étant référencée 105 dans la deuxième variante ; et enfin, un écran perméable à l'eau, désigné par 7 dans la première variante, et par 107 dans la deuxième variante. Ces trois éléments sont, l'un par rapport à l'autre, disposés de la même façon dans les deux variantes, c'est-à-dire que la couche fibreuse est du côté du flux aqueux pollué et l'écran du flux aqueux clarifié.

Les bordures basses de la grille 104 et de l'écran 107 sont disposées au droit d'une goulotte de d'évacuation 110 sur toute la largeur de l'unité de dépollution. La goulotte 110 a la même fonction que le dispositif d'évacuation 10 de la première variante et permet d'évacuer les solides qui auraient pu traverser la couche fibreuse 105 et la grille 104, qui ne peuvent pas traverser l'écran 107 et qui descendent par gravité dans la goulotte 110 pour éviter tout bouchage dû à la présence de l'écran 107.

Le mode de fonctionnement de cette variante est exactement le même que celui décrit en détail pour la première variante : il se forme dans la couche fibreuse 105, au fur et à mesure du passage du flux pollué, un biofilm à mailles très serrées généré par les biopolymères qui sont fournis par les microorganismes du flux aqueux pollué traversant. Ce biofilm permet d'obtenir la dépollution et la clarification de l'eau qui a été introduite dans le bassin 101. L'eau clarifiée est évacuée selon la flèche F1 par un déversoir (non représenté) qui maintient les niveaux de liquides 102 et 108 de part et d'autre de l'unité de dépollution.

La surface de l'unité de dépollution 106 traversée par le flux aqueux est sensiblement la même que la surface développée du cylindre de l'unité 6 de la première variante, les volumes séparés par l'unité de dépollution sont sensiblement les mêmes dans les deux variantes de même que le débit traité. Les paramètres de pollution afférents aux débits entrant et sortant sont également sensiblement les mêmes dans les deux variantes.

## Revendications

1. Unité de dépollution (6, 106) apte à être au moins partiellement immergée dans le bassin (1, 101) d'une station d'épuration ouvert à sa partie supérieure et apte à coopérer avec ledit bassin (1, 101) de telle sorte qu'un flux aqueux pollué renfermant des matières organiques dissoutes ainsi que des matières solides et des microorganismes en suspension puisse alimenter le côté amont du bassin aéré (1, 101) et fournir, en sortie de ladite unité (6, 106), un flux d'eau dépollué clarifié, l'unité (6, 106) comportant :
- un déversoir (14, F1), qui évacue l'eau dépolluée vers l'extérieur du bassin (1, 101) ;
- au moins un séparateur de zones traversé par le flux aqueux pollué du bassin (1, 101), l'une des faces dite « face amont » étant conçue pour recevoir directement le flux aqueux pollué du bassin alors que l'autre face dite « face aval » est conçue pour alimenter le déversoir (14, F1), le séparateur de zones délimitant donc deux zones, une en amont et une en aval du séparateur, les liquides des deux zones délimitées par le séparateur étant soumis à la même pression externe Po lorsque celui-ci est en opération dans le bassin aéré (1, 101) ;
le séparateur comportant sur sa face amont une grille (4, 104) recouverte, du côté amont du bassin (1, 101), par une couche (5, 105) fibreuse ou filamenteuse, qui est conçue pour arrêter la majeure des parties des matières solides en suspension du flux d'alimentation du bassin (1,101) ;
la face aval du séparateur étant recouverte d'un écran (7, 107) perméable au liquide du bassin (1, 101) au moins partiellement dépollué par son passage à travers la face amont du séparateur et conçu pour arrêter les matières solides ayant traversé la couche fibreuse (5, 105) et la grille (4, 104), un espace étant ménagé entre la grille (4,104) et l'écran (7, 107) et débouchant en partie basse de l'écran (7, 107) sur un dispositif d'évacuation (10, 110) des matières solides situé en partie basse de l'écran (7, 107).

2. Unité selon la revendication 1, ***caractérisée en ce que*** la pression P₀ est la pression atmosphérique et que le débit liquide déversé hors d'une unité (6, 106) est défini par le positionnement du déversoir (14, F1) par rapport au niveau du liquide pollué du côté amont du bassin (1, 101), la couche (5, 105) fibreuse ou filamenteuse étant en totalité au-dessous du niveau du déversoir.

3. Unité selon l'une des revendications 1 à 2, ***caractérisée en ce qu***'une unité de la station peut être désolidarisée de ses moyens de liaison sur le bassin pour permettre son remplacement, lorsque sa fonction de dépollution devient insuffisante.

4. Unité selon l'une des revendications 1 à 3, ***caractérisée en ce que*** la grille (4) du séparateur d'une unité de dépollution (6) a une forme cylindrique et la base de l'écran (7) a une forme conique.

5. Unité selon la revendication 4, ***caractérisée en ce que*** la partie conique (9) de l'écran (7) est raccordée à la bordure basse de la grille (4).

6. Elément de station d'épuration comprenant un bassin aéré (1, 101), et au moins une unité de dépollution (6,106) selon l'une des revendications 1 à 5.

7. Elément de station d'épuration selon la revendication 6, ***caractérisé en ce que*** le bassin (1) a une forme cylindrique d'axe vertical, et ladite unité ayant un axe parallèle à l'axe vertical du bassin.

8. Elément de station d'épuration selon la revendication 6, ***caractérisé en ce que*** le bassin (101) a une forme allongée dans le sens de l'écoulement du flux pollué entrant, le flux sortant par le déversoir étant extrait de la zone de bassin la plus éloignée de celle qui reçoit le flux entrant, la grille (104) du séparateur d'une unité de dépollution (106) étant disposée transversalement par rapport au déplacement du flux aqueux pollué dans le côté amont du bassin (101).

9. Elément de station d'épuration selon la revendication 8, ***caractérisé en ce que*** le bassin aéré (101) est rectangulaire et la grille (104) du séparateur d'une unité de dépollution (106) est plane et perpendiculaire au courant du flux pollué dans le côté amont du bassin (101).

10. Procédé d'épuration d'un flux aqueux pollué renfermant des matières organiques dissoutes ainsi que des matières solides et des microorganismes en suspension, le flux pollué alimentant le côté amont d'un bassin aéré ouvert à sa partie supérieure, ledit bassin (1,101) coopérant avec au moins une unité de dépollution selon la revendication 1 pour fournir, en sortie, un flux d'eau dépollué clarifié et une évacuation des matières solides.

## Patentansprüche

1. Reinigungseinheit (6, 106), die zumindest teilweise in das Becken (1, 101) einer an ihrem oberen Teil offenen Kläranlage eintauchen kann und mit diesem Becken so zusammenwirken kann, dass ein verunreinigter Wasserstrom, der gelöste or ^#ganische Stoffe sowie Feststoffe und Mikroorganismen in Suspension enthält, die stromaufwärtige Seite des belüfteten Beckens (1, 101) speisen und am Ausgang der Einheit (6, 106) einen geklärten, gereinigten Wasserstrom liefern kann, wobei die Einheit (6, 106) Folgendes umfasst:
- ein Wehr (14, F1), das das gereinigte Wasser nach außerhalb des Beckens (1, 101) ableitet;
- mindestens einen Zonen-Abscheider, durch den der verunreinigte Wasserstrom aus dem Becken (1, 101) strömt, wobei eine der Seiten, die als "stromaufwärtige Seite" bezeichnet wird, dazu bestimmt ist, direkt den verunreinigten Wasserstrom aus dem Becken aufzunehmen, während die andere Seite, die als "stromabwärtige Seite" bezeichnet wird, dazu bestimmt ist, das Wehr (14, F1) zu speisen, wobei der Zonen-Abscheider somit zwei Zonen abgrenzt, eine stromaufwärtige und eine stromabwärtige Zone des Abscheiders, wobei die Flüssigkeiten in den beiden durch den Abscheider abgegrenzten Zonen dem gleichen äußeren Druck Po ausgesetzt sind, wenn der Abscheider in dem belüfteten Becken (1, 101) in Betrieb ist;
wobei der Abscheider auf seiner stromaufwärtigen Seite ein Sieb (4, 104) aufweist, das auf der stromaufwärtigen Seite des Beckens (1, 101) durch eine faser- oder fadenförmige Schicht (5, 105) bedeckt ist, die dazu bestimmt ist, den größten Teil der suspendierten Feststoffe in dem Zufuhrstrom zu dem Becken (1, 101) abzufangen;
wobei die stromabwärtige Seite des Abscheiders mit einem Sieb (7, 107) abgedeckt ist, das für die Flüssigkeit in dem Becken (1, 101) durchlässig ist, die zumindest teilweise durch ihren Durchlauf durch die stromaufwärtige Seite des Abscheiders gereinigt wird und dazu bestimmt ist, die Feststoffe, die die Faserschicht (5, 105) und das Gitter (4, 104) passiert haben, aufzuhalten, wobei zwischen dem Gitter (4, 104) und dem Sieb (7, 107) ein Raum vorgesehen ist, der sich im unteren Teil des Siebes (7, 107) zu einer im unteren Teil des Siebes (7, 107) befindlichen Vorrichtung (10, 110) zum Austragen von Feststoffen öffnet.

2. Einheit nach Anspruch 1, ***dadurch gekennzeichnet, dass*** der Druck Po atmosphärischer Druck ist und dass der aus einer Einheit (6, 106) austretende Flüssigkeitsdurchsatz durch die Positionierung des Wehrs (14, F1) relativ zum Niveau der verschmutzten Flüssigkeit auf der stromaufwärts gelegenen Seite des Beckens (1, 101) definiert ist, wobei die faser- oder fadenförmige Schicht (5, 105) vollständig unter dem Niveau des Wehrs liegt.

3. Einheit nach einem der Ansprüche 1 bis 2, ***dadurch gekennzeichnet, dass*** eine Einheit der Anlage von ihren Verbindungsmitteln am Becken gelöst werden kann, um ausgetauscht zu werden, wenn ihre Reinigungsfunktion nicht mehr ausreichend ist.

4. Einheit nach einem der Ansprüche 1 bis 3, ***dadurch gekennzeichnet, dass*** das Gitter (4) des Abscheiders einer Reinigungseinheit (6) eine zylindrische Form und der Boden des Siebes (7) eine konische Form aufweist.

5. Einheit nach Anspruch 4, ***dadurch gekennzeichnet, dass*** der konische Teil (9) des Siebes (7) mit der Unterkante des Gitters (4) verbunden ist.

6. Kläranlagen-Element, umfassend ein belüftetes Becken (1, 101) und mindestens eine Reinigungseinheit (6, 106) nach einem der Ansprüche 1 bis 5.

7. Kläranlagen-Element nach Anspruch 6, ***dadurch gekennzeichnet, dass*** das Becken (1) eine zylindrische Form mit einer vertikalen Achse aufweist, und dass die Einheit eine Achse parallel zur vertikalen Achse des Beckens aufweist.

8. Kläranlagen-Element nach Anspruch 6, ***dadurch gekennzeichnet, dass*** das Becken (101) in Fließrichtung des einströmenden verunreinigten Stroms eine längliche Form aufweist, wobei der durch das Wehr abfließende Strom aus dem Beckenbereich abgeleitet wird, der von dem Bereich, der den einströmenden Strom aufnimmt, am weitesten entfernt ist, wobei das Gitter (104) des Abscheiders einer Reinigungseinheit (106) quer zur Bewegung des verunreinigten Wasserstroms auf der stromaufwärtigen Seite des Beckens (101) angeordnet ist.

9. Kläranlagen-Element nach Anspruch 8, ***dadurch gekennzeichnet, dass*** das belüftete Becken (101) rechteckig ist und das Gitter (104) des Abscheiders einer Reinigungseinheit (106) flach und senkrecht zur Strömung des verunreinigten Stroms in der stromaufwärts gelegenen Seite des Beckens (101) ist.

10. Verfahren zum Reinigen eines verunreinigten Wasserstroms, der gelöste organische Stoffe sowie suspendierte Feststoffe und Mikroorganismen enthält, wobei der verunreinigte Strom die stromaufwärtige Seite eines belüfteten, an seinem oberen Teil offenen Beckens speist, wobei das Becken (1, 101) mit mindestens einer Reinigungseinheit nach Anspruch 1 zusammenwirkt, um am Auslass einen geklärten, gereinigten Wasserstrom und einen Austrag der Feststoffe zu liefern.

## Claims

1. Decontamination unit (6, 106) which is capable of being at least partially immersed in a basin (1, 101) of a water treatment plant, open at its upper part and capable of cooperating with said basin such that a contaminated aqueous flow containing dissolved organic matter and suspended solid matter and microorganisms can supply the upstream side of the aerated basin (1, 101) and provide, at the outlet of said unit (6, 106), a flow of decontaminated, clarified water, the unit (6, 106) comprising:
- an outlet (14, F1) which discharges the decontaminated water to the outside of the basin (1, 101);
- at least one region separator crossed by the contaminated aqueous flow from the basin (1, 101), one of the faces called the "upstream face" being designed to directly receive the contaminated aqueous flow from the basin, while the other face called the "downstream face" is designed to supply the outlet (14, F1), the region separator therefore delimiting two zones, one upstream and one downstream of the separator, the liquids of the two regions delimited by the separator being subjected to the same external pressure P₀ when it is in operation in the aerated basin (1, 101);
on its upstream face, the separator comprising a grid (4, 104) covered, on the upstream side of the basin (1, 101), by a fibrous or filamentary layer (5, 105) which is designed to stop the majority of the suspended solid matter from the feed stream of the basin (1, 101);
the downstream face of the separator being covered with a screen (7, 107) which is permeable to the liquid of the basin (1, 101) that is at least partially decontaminated by its passage through the upstream face of the separator and designed to stop the solid matter having passed through the fibrous layer (5, 105) and the grid (4, 104), a space being provided between the grid (4, 104) and the screen (7, 107) and opening out at the lower part of the screen (7, 107) on a device (10, 110) for discharging solid matter located in the lower part of the screen (7, 107).

2. Unit according to claim 1, ***characterized in that*** the pressure P₀ is atmospheric pressure and **in that** the liquid flow discharged from the unit (6, 106) is defined by the positioning of the outlet (14, F1) with respect to the level of the contaminated liquid on the upstream side of the basin (1, 101), the fibrous or filamentary layer (5, 105) being entirely below the level of the outlet.

3. Unit according to either claim 1 or claim 2, ***characterized in that*** a unit of the station can be separated from its connecting means on the basin in order to allow for its replacement when its decontamination function becomes insufficient.

4. Unit according to any of claims 1 to 3, ***characterized in that*** the grid (4) of the separator of the decontamination unit (6) has a cylindrical shape and the base of the screen (7) has a conical shape.

5. Unit according to claim 4, ***characterized in that*** the conical part (9) of the screen (7) is attached to the lower edge of the grid (4).

6. Water treatment plant element, comprising an aerated basin (1, 101), and at least one decontamination unit (6, 106) according to any of claims 1 to 5.

7. Water treatment plant element according to claim 6, ***characterized In that*** the basin (1) has a cylindrical shape with a vertical axis, and said unit having an axis parallel to the vertical axis of the basin.

8. Water treatment plant element according to claim 6, ***characterized in that*** the basin (101) has an elongate shape in the direction of the stream of the incoming contaminated flow, the flow going out through the outlet being extracted from the basin at the region furthest from the region which receives the incoming flow, the grid (104) of the separator of the decontamination unit (106) being arranged transversely with respect to the displacement of the contaminated aqueous flow in the upstream side of the basin (101).

9. Water treatment plant element according to claim 8, ***characterized in that*** the aerated basin (101) is rectangular and the grid (104) of the separator of the decontamination unit (106) is flat and perpendicular to the current of the contaminated flow in the upstream side of the basin (101).

10. Method for treating a contaminated aqueous flow containing dissolved organic matter and suspended solid matter and microorganisms, the contaminated flow supplying the upstream side of an aerated basin which is open at its upper part, said basin (1, 101) interacting with at least one decontamination unit according to claim 1 in order to provide, at the outlet, a flow of decontaminated, clarified water and a discharge of the solid matter.
